# EUROPÄISCHE PATENTSCHRIFT

(11) **EP 2 907 697 B1**
(45) Veröffentlichungstag und Bekanntmachung des Hinweises auf die Patenterteilung: **08.04.2020**
(21) Anmeldenummer: 15154065.5
(22) Anmeldetag: 06.02.2015
(51) Int. Cl.: B60Q 1/00, F21S 41/19, F21S 45/00, H01R 12/58, H01R 13/66

(54) **Beleuchtungseinrichtung eines Kraftfahrzeugs**
Illumination device of a motor vehicle
Dispositif d'éclairage d'un véhicule automobile

(30) Priorität: 18.02.2014 DE 102014202910
(43) Veröffentlichungstag der Anmeldung: 19.08.2015
(73) Patentinhaber: Automotive Lighting Reutlingen GmbH, 72762 Reutlingen (DE)
(72) Erfinder: Hiegler, Michael, 72760 Reutlingen (DE); Leippert, Anna, 72768 Reutlingen (DE); Blum, Dirk, 72076 Tübingen (DE); Bormann, Uwe, 89520 Heidenheim (DE)
(74) Vertreter: DREISS Patentanwälte PartG mbB

(56) Entgegenhaltungen:
- EP-A1- 1 481 845
- DE-A1- 10 163 378
- DE-A1- 19 801 061
- JP-A- 2013 089 415

## Beschreibung

Die vorliegende Erfindung betrifft eine Beleuchtungseinrichtung eines Kraftfahrzeugs nach dem Oberbegriff des Anspruchs 1. Eine solche Beleuchtungseinrichtung ist aus der EP 1 481 845 A1 und aus der JP 2013 089415 A bekannt.

Aus dem Stand der Technik sind verschiedenartige Beleuchtungseinrichtungen für Kraftfahrzeuge bekannt. Diese können als Scheinwerfer oder als Leuchten ausgebildet sein. Scheinwerfer sind im Frontbereich eines Fahrzeugs angeordnet und dienen neben der Verkehrssicherheit durch eine Sichtbarmachung des Fahrzeugs für andere Verkehrsteilnehmer insbesondere der Ausleuchtung eines Bereichs vor dem Fahrzeug, z.B. in Form einer Abblend-, Fern- oder Nebel-Lichtverteilung sowie in Form von an bestimmte Umgebungs- und/oder Fahrsituationen anpassbaren adaptiven Lichtverteilungen, wie bspw. dynamisches Kurvenlicht, Schlechtwetterlicht, Stadtlicht, Landstraßenlicht, Autobahnlicht oder eine Lichtverteilung mit dynamischer Leuchtweitenregulierung. Die Erzeugung der Lichtverteilung erfolgt durch mindestens ein Lichtmodul der Beleuchtungseinrichtung.

Leuchten dienen überwiegend der Verkehrssicherheit durch Sichtbarmachung des Fahrzeugs für andere Verkehrsteilnehmer. So werden Bugleuchten im Frontbereich des Fahrzeugs beispielsweise zur Erzeugung von Tagfahrlicht, Blinklicht oder Positionslicht und Heckleuchten im Heckbereich des Fahrzeugs beispielsweise als Bremslicht, Rückleuchte, Rückfahrlicht oder Blinklicht eingesetzt. Die Bugleuchten können dabei in einem Scheinwerfer integriert sein, sie können aber auch als separates Lichtmodul ausgebildet und im Frontbereich des Fahrzeugs angeordnet sein. Eine Leuchte kann eine oder mehrere Leuchtenfunktionen erfüllen. In einer Leuchte sind häufig mehrere Leuchtenfunktionen integriert, die von einem oder mehreren Lichtmodulen erzeugt werden.

Die Lichtmodule umfassen mindestens eine Lichtquelle, bspw. in Form einer Glühlampe, Gasentladungslampe oder Halbleiterlichtquelle, zum Erzeugen und Aussenden von Licht. In modernen Lichtmodulen werden die Glühlampen und Gasentladungslampen mehr und mehr durch Halbleiterlichtquellen, insbesondere Leuchtdioden (LEDs oder OLEDs), ersetzt.
Die Lichtmodule umfassen mindestens eine Primäroptik zum Bündeln des von der Lichtquelle ausgesandten Lichts. Die Primäroptik kann als ein Reflektor (Hohlspiegel) ausgebildet sein, der das Licht mittels herkömmlicher Spiegelung reflektiert. Der Reflektor kann die Form eines Ellipsoids, eines Paraboloids oder eine beliebig andere arithmetisch berechnete Freiform haben. Die Primäroptik kann aber auch einen lichtdurchlässigen Körper aus Glas oder Kunststoff umfassen (sog. Vorsatzoptik), wobei die Bündelung des Lichts dann durch Brechung beim Eintritt in den Körper und/oder Austritt aus dem Körper und/oder durch Totalreflexion an äußeren Grenzflächen des Körpers erfolgt.

Die Lichtmodule arbeiten z.B. nach einem Reflexionsprinzip, wobei von einer Lichtquelle ausgesandtes Licht zur Erzeugung einer gewünschten Lichtverteilung durch eine als Reflektor ausgebildete Primäroptik auf die Fahrbahn vor das Fahrzeug reflektiert wird.

Die Lichtmodule können aber auch nach einem Projektionsprinzip arbeiten, wobei von der Lichtquelle ausgesandtes Licht nach der Bündelung durch die Primäroptik, zur Erzeugung einer gewünschten Lichtverteilung durch eine Projektionsoptik auf der Fahrbahn vor dem Fahrzeug abgebildet wird. Die Projektionsoptik kann als eine Sammellinse oder als ein Reflektor, vorzugsweise in einer Paraboloidform, ausgebildet sein.

Die Lichtmodule können auch Lichtleiter zum Propagieren von Licht umfassen. Die Lichtleiter sind aus einem transparenten Material mit totalreflektierenden Eigenschaften hergestellt. An vorbestimmten Positionen im Lichtleiter kann Licht in den Lichtleiter eingekoppelt werden, und an anderen Positionen kann das eingekoppelte Licht gezielt ausgekoppelt werden und an entsprechenden Lichtaustrittsflächen des Lichtleiters austreten.

Das oder die Lichtmodule sind in einem Gehäuse der Beleuchtungseinrichtung angeordnet, wobei das Gehäuse vorzugsweise aus Kunststoff gefertigt ist. Das Gehäuse weist eine durch eine lichtdurchlässige Abdeckscheibe aus Glas oder Kunststoff dicht verschlossene Lichtaustrittsöffnung auf, durch die das Licht die Beleuchtungseinrichtung verlassen kann. Die Abdeckscheibe kann zumindest bereichsweise optisch wirksame Elemente (z.B. Prismen, Zylinderlinsen, etc.) aufweisen (sog. Streuscheibe). Sie kann aber auch ohne solche optisch wirksamen Elemente ausgebildet sein (sog. klare Scheibe).

Ein Lichtmodul ist entweder alleine oder zusammen mit anderen Lichtmodulen in dem Gehäuse der Beleuchtungseinrichtung angeordnet. Eine gewünschte Lichtverteilung kann dabei durch ein einziges Lichtmodul oder aber durch mehrere Lichtmodule und durch Überlagerung der von diesen ausgesandten Teillichtverteilungen erzeugt werden. Ein einziges Lichtmodul kann auch mehrere Lichtverteilungen erzeugen. Ein Steuergerät ist für den Betrieb des Lichtmoduls vorgesehen, bspw. zur Energieversorgung einer Gasentladungslampe oder einer Halbleiterlichtquelle, zur Bewegung des Lichtmoduls relativ zum Gehäuse der Beleuchtungseinrichtung um eine horizontale und/oder vertikale Drehachse, zur Variation der Lichtverteilung, zum Erzeugen mehrerer Teillichtverteilungen und zur Überlagerung der Teillichtverteilung zur Erzielung der resultierenden Gesamtlichtverteilung der Beleuchtungseinrichtung.

Das Lichtmodul kann starr oder beweglich an dem Gehäuse der Beleuchtungseinrichtung befestigt sein. Zur Realisierung einer dynamischen Kurvenlichtfunktion kann das Lichtmodul um eine im Wesentlichen vertikale Schwenkachse bewegbar gelagert sein. Außerdem kann das Lichtmodul zur Variation der Leuchtweite des von dem Lichtmodul ausgesandten Lichts um eine im Wesentlichen horizontale Schwenkachse bewegbar gelagert sein. Die gewünschte Bewegung des Lichtmoduls wird über einen von dem Steuergerät der Beleuchtungseinrichtung gesteuerten bzw. geregelten Aktor realisiert.

Das Steuergerät steuert bzw. regelt alle gewünschten dynamischen bzw. alle veränderbaren Funktionen der in der Beleuchtungseinrichtung angeordneten Lichtmodule. Dabei können die notwendigen Funktionen auch auf mehrere Steuergeräte verteilt sein. Neben den bereits genannten Funktionen kann das Steuergerät darüber hinaus z.B. auch eine Blendenvorrichtung zur Erzeugung einer Hell-Dunkelgrenze auf der Fahrbahn steuern, wobei die Hell-Dunkelgrenze auch adaptiv abhängig von dem aktuellen Verkehrsgeschehen oder abhängig von aktuellen Witterungsbedingungen um die Beleuchtungseinrichtung herum gesteuert werden kann. Das Steuergerät kann auch einen Lüfter zum Enttauen der Abdeckscheibe steuern, oder es kann Lichtquellen, insbesondere Halbleiterlichtquellen, zur Erzeugung unterschiedlicher Teil-Lichtverteilungen, auch variabler Teil-Lichtverteilungen, entsprechend steuern bzw. regeln. Dazu ist das Steuergerät als separate Einheit üblicherweise im Frontbereich des Kraftfahrzeugs, zwischen Fahrgastzelle und Motorraum, im Motorraum oder direkt an dem Gehäuse der Beleuchtungseinrichtung befestigt.

Zum Betreiben der Beleuchtungseinrichtung, insbesondere von als Scheinwerfer ausgebildeten Beleuchtungseinrichtungen im Frontbereich des Kraftfahrzeugs, werden bekanntermaßen vielpolige Steckerverbindungen verwendet, wobei ein Steckerelement von einem Anschlusselement des Gehäuses aufgenommen wird. Das Steckerelement ist üblicherweise mit einem Kabel verbunden, das mit einer Energiequelle und/oder einem übergeordneten Steuergerät (z.B. Body-Controller) und/oder einem Datenbus in Verbindung steht. Das Anschlusselement ist in der Regel an dem Gehäuse der Beleuchtungseinrichtung von außen zugänglich fest angeordnet. Das Steckerelement kann bspw. eine Stiftleiste mit matrixartig angeordneten elektrisch leitenden Kontaktstiften umfassen, die mit einer Buchsenleiste elektrisch und/oder mechanisch zusammenwirkt, die im Wesentlichen komplementär zur Stiftleiste in dem Anschlusselement ausgebildet ist. Die Kontaktstifte der Stiftleiste des Steckerelements treten mit elektrisch kontaktierten Buchsen der Buchsenleiste in Kontakt. Eine elektrische Belegung der Kontaktstifte bzw. der Buchsen ist anwendungsbedingt vorgegeben.

Bekannt ist allerdings auch, dass das am Gehäuse fest angeordnete Anschlusselement matrixartig angeordnete Kontaktstifte aufweist, die mit im Wesentlichen komplementär zu den Kontaktstiften angeordneten Buchsen des Steckerelements zusammenwirken.

Das am Steckerelement befestigte Kabel stellt eine elektrische Verbindung zwischen einer elektrischen Energieversorgungseinrichtung (z.B. einer Fahrzeugbatterie) und dem Steuergerät her. Außerdem sind in der Regel auch Signalleitungen von anderen externen Steuereinrichtungen und/oder externen Sensoreinrichtungen des Kraftfahrzeugs an Kontakten des Steckerelements angelegt, wobei die Signale der Signalleitungen als Eingangssignale vom Steuergerät verarbeitet werden. Das Steckerelement wird deshalb auch als Zentralstecker bezeichnet.

Die Steckerverbindung ist in der Regel eine lösbare Verbindung. Es ist aber auch möglich, dass das Steckerelement an der Anschlusseinheit des Gehäuses angespritzt ist und somit eine unlösbare Verbindung darstellt. In diesem Fall kann das Kabel, z.B. nach einem Marderbiss, nicht einfach ausgetauscht werden.

Aufgabe der Erfindung ist es, eine Beleuchtungseinrichtung dahingehend auszugestalten und weiterzubilden, dass die Steuergerätefunktionalität zum Betreiben des Lichtmoduls der Beleuchtungseinrichtung möglichst kompakt und bedienerfreundlich ausgebildet ist.

Die Aufgabe wird mit den Merkmalen des Anspruchs 1 gelöst.

Das verwendete Steckerelement weist ein Steckergehäuse auf, in dem im Innern bekanntermaßen zumindest elektrische Leitungen (zur Herstellung einer elektrischen Verbindung zwischen Kontaktelementen einerseits und Energieversorgungsquelle und/ oder übergeordnetem Steuergerät andererseits), Kontaktelemente (zur Herstellung eines elektrischen Kontakts mit entsprechenden Kontaktelementen eines Anschlusselements) und Führungselemente (zum mechanischen Führen des Steckerelements in ein passendes Anschlusselement) angeordnet sind. Dabei weist das Innere des Steckergehäuses genügend Bauraum auf, um elektronische und elektrische Bauelemente zusätzlich im Steckergehäuse zu integrieren. Die Bauelemente können dabei Mikrochips oder andere integrierte Schaltungen aufweisen. Die Bauelemente umfassen bspw. einen Mikroprozessor, auf dem ein Computerprogramm zur Realisierung zumindest eines Teils der Steuergerätefunktion ablaufen kann. Die Bauelemente umfassen ferner bspw. ein Speicherelement, auf dem das Computerprogramm abgespeichert ist. Zur Abarbeitung des Computerprogramms auf dem Mikroprozessor wird das Computerprogramm entweder befehls- oder abschnittsweise oder als ganzes aus dem Speicherelement in den Mikroprozessor übertragen und dort abgearbeitet. Die Bauelemente können auch Leistungshalbleiterelemente zum Aufbereiten einer Versorgungsspannung umfassen. Dadurch kann das herkömmliche externe Steuergerät entlastet werden, was bspw. Wärmeprobleme des externen Steuergeräts mindern kann. Zudem kann das externe Steuergerät kleiner und leichtbauender ausgestaltet werden. Das Steckergehäuse kann die äußere Form und Abmessung eines herkömmlichen Steckerelements beibehalten. Vorzugsweise ist in dem Steckergehäuse ein Mikrocontroller angeordnet, der alle nötigen Bauteile eines Computers umfasst.

Die erfindungsgemäße Beleuchtungseinrichtung ist vorzugsweise dazu eingerichtet, mindestens eine Scheinwerferfunktion (z.B. Abblendlicht, Fernlicht, Nebellicht) und/oder mindestens eine Leuchtenfunktion (z.B. Begrenzungslicht, Positionslicht, Blinklicht, Tagfahrlicht, Rücklicht, Bremslicht) zu erzeugen. Dabei ist bevorzugt vorgesehen, dass das mindestens eine Lichtmodul der Beleuchtungseinrichtung mindestens eine variable Lichtverteilung (bspw. Markierungslicht oder Teilfernlicht, Stadtlicht, Landstraßenlicht, Autobahnlicht, Schlechtwetterlicht) erzeugt. Als Lichtquelle ist bevorzugt mindestens eine Halbleiterlichtquelle, insbesondere mindestens eine Leuchtdiode, vorgesehen. Selbstverständlich kann aber auch eine Gasentladungslampe oder eine Glühlampe als Lichtquelle vorgesehen sein.

In einer bevorzugten Ausführungsform ist vorgesehen, dass elektronische und/oder elektrische Bauteile zur Realisierung der vollständigen Steuergerätefunktion in dem Steckerelement integriert sind. Dadurch kann bspw. auf ein zusätzliches, separat angeordnetes Steuergerät verzichtet werden. Dadurch kann Gewicht eingespart werden, da das Gehäuse von externen Steuergeräten oft recht schwer ist, da es z.B. aus Druckguss hergestellt ist. Ferner kann dadurch Bauraum eingespart werden, da das Gehäuse von externen Steuergeräten oft großvolumig ist. Außerdem kann auf Kabelverbindungen verzichtet werden, die ein externes Steuergerät üblicherweise mit dem Steckerelement der Beleuchtungseinrichtung zur Energieversorgung und/oder Signalübertragung verbinden. Die elektrischen Verbindungen im Steckergehäuse sind auf kleinstem Raum von den Bauteilen zur Realisierung der Steuergerätefunktion an Kontaktelemente des Steckerelements geführt. Die Kontaktelemente sind erfindungsgemäß Kontaktstifte, die beim Einführen des Steckerelements in das Anschlusselement des Gehäuses der Beleuchtungseinrichtung mit entsprechenden Kontaktbuchsen des Anschlusselements in Kontakt treten. Dies vermindert die Anzahl der zum Betreiben der Lichtmodule benötigten Bauteile, verringert den Montage- und Verkabelungs-Aufwand und verbessert damit die Zuverlässigkeit der gesamten Beleuchtungseinrichtung.

Außerdem ist vorgesehen, dass das Steckerelement von dem Anschlusselement lösbar aufgenommen ist. Damit ist es einfach, das Steuergerät neu zu programmieren bzw. auszutauschen.

Zum Programmieren muss lediglich das Steckerelement von dem Anschlusselement gelöst werden. Anschließend kann z.B. ein Personal Computer (PC) am Steckerelement angeschlossen werden, wonach die im Steckerelement integrierte Steuergerätefunktion über den PC entsprechend programmiert werden kann. Danach wird das Steckerelement wieder mit dem Anschlusselement verbunden. Die Beleuchtungseinrichtung kann anschließend sofort mit der geänderten Software betrieben werden und es stehen die aktualisierten Steuergerätefunktionen zur Verfügung.

Ferner ist vorgesehen, dass das Steckerelement ohne zusätzliche Befestigungsmittel vom Anschlusselement gehalten ist. Das bedeutet, dass die Kontaktstifte der Stiftleiste und die Buchsen der zur Stiftleiste komplementär ausgebildeten Buchsenleiste derart ausgebildet und angeordnet sind, dass diese einerseits für eine dauerhafte und sichere elektrische Verbindung und andererseits für eine sichere, lösbare mechanische Verbindung und Halterung des Steckerelements in dem Anschlusselement sorgen. Das Steckerelement wird dabei im Wesentlichen durch Reibungskräfte, die zwischen den Kontaktstiften und den Buchsen wirken, gehalten.

Ergänzend ist vorgesehen, dass das Steckerelement durch Sicherungsmittel gegen ungewolltes Lösen von dem Anschlusselement aufgrund von mechanischen Belastungen gesichert ist. Dies kann bspw. durch an der Steckerverbindung und/oder dem Anschlusselement und/oder dem Gehäuse der Beleuchtungseinrichtung angeordnete Drahtbügel oder Schnappelemente realisiert werden, die das Steckerelement auch bei hohen mechanischen Belastungen (Schwingungen, Erschütterungen, Wärmeausdehnungen) in der eingesteckten Position an dem Anschlusselement halten. Denkbar ist auch, dass die Sicherungsmittel mindestens einen Magnet aufweisen, der die erforderlichen Haltekräfte zwischen dem Steckerelement und dem Anschlusselement erzeugt. Der Magnet kann dazu an der Steckerverbindung und/oder dem Anschlusselement und/oder dem Gehäuse der Beleuchtungseinrichtung angeordnet sein.

Besonders bevorzugt ist vorgesehen, dass das Steckerelement Press-Fit-Pins umfasst, deren Kontaktstifte mit Buchsen des Anschlusselements elektrisch und mechanisch zusammenwirken. Press-Fit-Pins sind aus Metall hergestellt und werden durch mechanischen Druck in metallisch ausgekleidete Bohrungen einer Leiterplatte eingepresst. Dabei stehen die Pins in einem elektrischen Kontakt mit den metallisch ausgekleideten Bohrungen. Beim Einpressen werden die Press-Fit-Pins verformt, so dass große Haltekräfte zwischen den Pins und der Leiterplatte wirken und eine mechanisch hoch belastbare Verbindung entsteht. Die in die Leiterplatte eingesetzten Pins bilden Stiftkontakte des Steckerelements. Es ist kein Lötvorgang nötig.

Es ist vorgesehen, dass die Press-Fit-Pins mit Bohrungen einer Platine, auf der die elektronischen und/oder elektrischen Bauteile zur Realisierung der Steuergerätefunktion angeordnet und kontaktiert sind, eine nur unter Aufbringung eines vorgegebenen Kraftaufwands lösbare Einheit bilden. Das bedeutet, dass die Platine metallisch ausgekleidete Bohrlöcher aufweist, in denen die Press-Fit-Pins mit dem dazu vorgesehenen Ende verpresst werden. Die metallische Auskleidung ist über Leiterbahnen der Platine mit den Bauteilen und/oder den in das Steckerelement geführten Energieversorgungs- oder Signalübertragungs-Leitungen verbunden. Die Platine kann dabei derart in dem Steckergehäuse angeordnet werden, dass die freien Enden der Press-Fit-Pins aus dem Steckergehäuse als Kontaktstifte des Steckerelements herausragen. Dies erlaubt eine sehr flache Ausgestaltung der Leiterplatte. Eine solche Verwendung der Press-Fit-Pins führt zu einer sehr kompakten Anordnung.

Ergänzend dazu wird vorgeschlagen, dass die Kontaktstifte der Press-Fit-Pins derart angeordnet sind, dass sie eine Stiftleiste des Steckerelements bilden, und die Kontaktstifte mit entsprechend angeordneten Buchsen einer Buchsenleiste des Anschlusselements elektrisch und mechanisch zusammenwirken.

Außerdem ist vorgesehen, dass die elektronischen und/oder elektrischen Bauteile zur Realisierung der Steuergerätefunktion in dem Steckerelement umspritzt sind. Die Umspritzung dient einer erhöhten Stabilität des Steckerelements und zum Schutz der im Steckerelement integrierten Bauelemente vor mechanischen, thermischen und witterungsbedingten Belastungen. Um eine Wärmeableitung zusätzlich zu fördern, wird dazu bevorzugt ein Kunststoff mit guten wärmeleitenden Eigenschaften verwendet.

Ferner ist vorgesehen, dass das Steckerelement eine von außerhalb des Steckerelements sichtbare Kontrollleuchte aufweist. Die Kontrollleuchte kann z.B. als eine Leuchtdiode ausgebildet sein. Sie kann dazu dienen, eine ordnungsgemäße Funktion der im Steckerelement integrierten Bauteile und/oder eine ordnungsgemäße Kontaktierung des Steckerelements mit dem Anschlusselement und/oder einen bestimmten Betriebsmodus der Bauteile bzw. der Steuergerätefunktion anzuzeigen.

Es wurde beschrieben, dass das Steckerelement Stiftkontakte und das Aufnahmeelemente Buchsenkontakte aufweist. Selbstverständlich gelten die obigen Ausführungen auch für den umgekehrten Fall, dass das Steckerelement Buchsenkontakte und das Aufnahmeelement Stiftkontakte aufweist. Auch Mischformen sind denkbar, bei denen sowohl das Steckerelement als auch das Aufnahmeelement Stift- und Buchsenkontakte aufweisen. Dabei ist jedoch stets ein Stiftkontakt des Steckerelements oder des Aufnahmeelements einem entsprechenden Buchsenkontakt des Aufnahmeelements bzw. des Steckerelements zugeordnet.

Ausführungsbeispiele der Erfindung sind in den Figuren dargestellt und werden in der nachfolgenden Beschreibung näher erläutert. Es zeigen, jeweils in schematischer Form:
- Figur 1: eine Beleuchtungseinrichtung eines Kraftfahrzeugs aus dem Stand der Technik;
- Figur 2: eine erfindungsgemäße Beleuchtungseinrichtung eines Kraftfahrzeugs;
- Figur 3: eine Schnittdarstellung eines Press-Fit-Pins;
- Figur 4: ein Steckerelement der Beleuchtungseinrichtung aus Figur 2 in einer aufgeschnittenen Seitenansicht; und
- Figur 5: das Steckerelement von Figur 4 in einer um 90° gedrehten Seitenansicht.

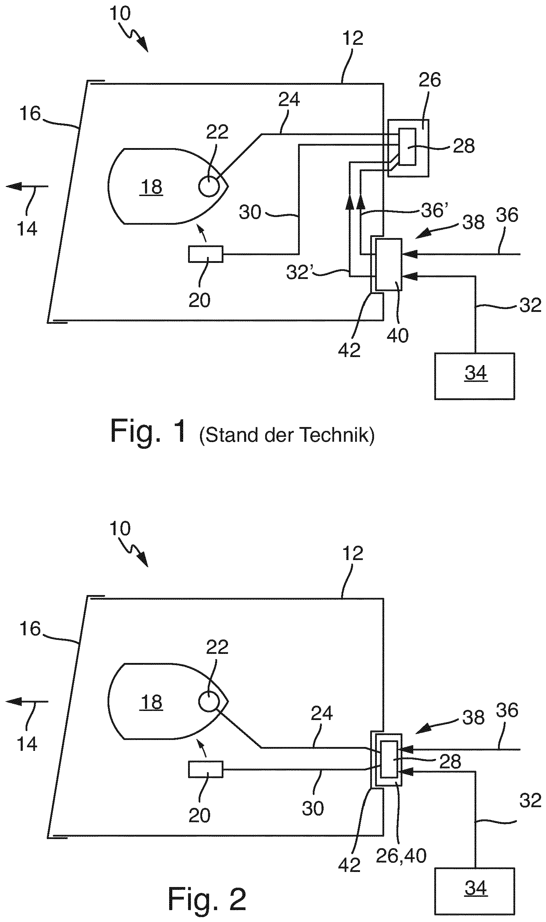

Figur 1 zeigt eine aus dem Stand der Technik bekannte Beleuchtungseinrichtung 10 eines Kraftfahrzeugs. Die Beleuchtungseinrichtung 10 weist ein Gehäuse 12 auf, das vorzugsweise aus Kunststoff gefertigt ist. Eine in Lichtaustrittsrichtung 14 ausgebildete Lichtaustrittsöffnung des Gehäuses 12 ist durch eine lichtdurchlässige Abdeckscheibe 16 dicht verschlossen. Die Abdeckscheibe 16 ist aus Glas oder Kunststoff hergestellt und kann zumindest bereichsweise optisch wirksame Elemente (z.B. Prismen, Zylinderlinsen, etc.) aufweisen (sog. Streuscheibe). Sie kann aber auch ohne solche optisch wirksamen Elemente ausgebildet sein (sog. klare Scheibe).

Die Beleuchtungseinrichtung 10 kann als ein Scheinwerfer, der im Frontbereich des Kraftfahrzeugs angeordnet ist, oder als eine Leuchte ausgebildet sein. Leuchten können im Front-, Heck- oder Seitenbereich des Kraftfahrzeugs angeordnet sein. Sie können auch in einem Scheinwerfer integriert sein. Mehrere Leuchten können in einer Heckleuchte zusammengefasst sein. Die gezeigte Beleuchtungseinrichtung 10 ist als ein Scheinwerfer ausgebildet und dient zur Erzeugung einer Scheinwerferfunktion (z.B. Abblend-, Fern- oder Nebel-Lichtverteilung) sowie einer an bestimmte Umgebungs- und/oder Fahrsituationen anpassbaren adaptiven Lichtverteilung (z.B. dynamisches Kurvenlicht, Schlechtwetterlicht, Stadtlicht, Landstraßenlicht, Autobahnlicht oder eine Lichtverteilung mit dynamischer Leuchtweitenregulierung). Vorzugsweise erzeugt die Beleuchtungseinrichtung 10 mehrere, unterschiedliche Lichtverteilungen.

Die entsprechenden Lichtverteilungen werden durch ein oder mehrere Lichtmodule 18 erzeugt, die in dem Gehäuse 12 der Beleuchtungseinrichtung 10 angeordnet sind. Figur 1 zeigt beispielhaft nur ein Lichtmodul 18. Das Lichtmodul 18 kann statisch oder bewegbar in dem Gehäuse 12 angeordnet sein. Bei einem bewegbaren Lichtmodul 18 sind Aktoren 20 vorgesehen, um die Bewegung zu bewirken. Es ist denkbar, dass die Aktoren 20 nicht das gesamte Lichtmodul 18, sondern nur Teile davon, bspw. eine nicht dargestellte Blendenvorrichtung zur Erzeugung einer horizontalen Hell-Dunkelgrenze der resultierenden Lichtverteilung, bewegen.

Zur Erzeugung von Licht weist das Lichtmodul 18 mindestens eine Lichtquelle 22 auf. Die Lichtquelle 22 kann eine Glühlampe, eine Gasentladungslampe mit oder ohne integriertem Zündgerät, mindestens eine Halbleiterlichtquelle, insbesondere mindestens eine Leuchtdiode, oder eine Laserlichtquelle umfassen.

Das Lichtmodul 18 umfasst mindestens eine Primäroptik zum Bündeln des erzeugten Lichts (nicht dargestellt). Die Primäroptik kann als ein Reflektor (Hohlspiegel) ausgebildet sein, der das Licht mittels herkömmlicher Spiegelung reflektiert. Die Primäroptik kann aber auch als ein lichtdurchlässiger Körper aus Glas oder Kunststoff ausgebildet sein (sog. Vorsatzoptik), wobei die Bündelung des Lichts dann durch Brechung beim Eintritt in den Körper und/oder beim Austritt aus dem Körper und/oder durch Totalreflexion an äußeren Grenzflächen des Körpers erfolgt.

Das Lichtmodul 18 kann z.B. nach einem Reflexionsprinzip arbeiten, wobei von der Lichtquelle 22 ausgesandtes Licht zur Erzeugung einer gewünschten Lichtverteilung durch eine als Reflektor ausgebildete Primäroptik (nicht dargestellt) in Lichtaustrittsrichtung 14 auf die Fahrbahn vor das Fahrzeug reflektiert wird.

Das Lichtmodul 18 kann aber auch nach einem Projektionsprinzip arbeiten, wobei von der Lichtquelle 22 ausgesandtes Licht nach der Bündelung durch die Primäroptik (nicht dargestellt), zur Erzeugung einer gewünschten Lichtverteilung durch eine ebenfalls nicht dargestellte Projektionsoptik in Lichtaustrittsrichtung 14 auf der Fahrbahn vor dem Fahrzeug abgebildet wird. Die Projektionsoptik kann als eine Sammellinse oder als ein Reflektor, vorzugsweise in einer Paraboloidform, ausgebildet sein.

Die Beleuchtungseinrichtung 10 umfasst ferner ein Steuergerät 26 zur Steuerung und/oder Regelung des Betriebs des Lichtmoduls 18. Das Steuergerät 26 ist im Frontbereich des Kraftfahrzeugs bspw. am Gehäuse 12 der Beleuchtungseinrichtung 10 vorzugsweise lösbar, z.B. verschraubt und/oder geklipst, befestigt. Über eine oder mehrere Öffnungen im Gehäuse 12 sind Leitungen von dem Steuergerät 26 ins Innere des Gehäuses 12 geführt.

Die Lichtquelle 22 ist über mindestens eine erste elektrische Leitung 24 mit dem Steuergerät 26 verbunden. Das Steuergerät 26 weist bspw. einen Mikrocontroller 28 mit einem Mikroprozessor auf, auf dem ein Computerprogramm zur Realisierung einer Steuerung und/oder Regelung des Betriebs des Lichtmoduls 18 ablauffähig ist. Dabei wird bspw. die elektrische Energie zum Betrieb der Lichtquelle 22 und zum Erzeugen der entsprechenden Lichtverteilung der Beleuchtungseinrichtung 10 gesteuert bzw. geregelt.

Außerdem sind die Aktoren 20 über eine zweite elektrische Leitung 30 mit dem Steuergerät 26 verbunden. In dem Mikrocontroller 28 des Steuergeräts 26 werden Signale generiert, die zur Ansteuerung der Aktoren 20 zum Erzeugen der entsprechenden Lichtverteilung vorgesehen sind.

Zur Energieversorgung der Beleuchtungseinrichtung 10 ist mindestens eine elektrische Versorgungsleitung 32 bzw. 32' vorgesehen, die eine Energieversorgungseinrichtung 34 mit dem Steuergerät 26 verbindet. Die Energieversorgungseinrichtung 34 umfasst bspw. eine Kraftfahrzeugbatterie, deren Energie der Beleuchtungseinrichtung 10 unmittelbar oder mittelbar nach einer Verarbeitung, z.B. über Gleichspannungswandler und eventuell Wechselrichter, zur Verfügung gestellt wird.

Andererseits werden Signale von anderen, externen Steuergeräten (z.B. sog. Body Controller) bzw. externen Sensoreinrichtungen des Kraftfahrzeugs über eine Signalleitung 36, 36' dem Steuergerät 26 zur Verfügung gestellt.

Die Versorgungsleitungen 32, 32' und die Signalleitungen 36, 36' sind über eine Steckerverbindung 38 lösbar an dem Gehäuse 12 angeschlossen. Die Steckerverbindung 38 umfasst einerseits ein Steckerelement 40 und andererseits ein Anschlusselement 42, das üblicherweise am Gehäuse 12 fest angeordnet (z.B. angespritzt) ist und das Steckerelement 40 aufnehmen kann. Die Versorgungsleitung 32 und die Signalleitung 36 sind an dem Steckerelement 40 angeschlossen. Zur elektrischen Kontaktierung in der Steckerverbindung 38 sind metallische Kontaktstifte vorgesehen, die mit metallischen Buchsen zur Bildung eines elektrischen Kontakts zusammenwirken (in Figur 1 nicht dargestellt).

Von dem Anschlusselement 42 verlaufen im Inneren des Gehäuses 12 elektrische Leitungen 32' und 36', die Energie und Signale an das Steuergerät 26 weiterleiten. Die elektrische Energie kann zum Betrieb der Lichtquelle 22, zur Betätigung von Aktoren 20 und für den Mikrocontroller 28 herangezogen werden. Die Signale liefern dem Steuergerät 26 Informationen über das Fahrzeug oder Teile davon, über das Verkehrsgeschehen und/oder über die Witterungsbedingungen im Umfeld des Fahrzeugs. Die Signale können bei der Steuerung und/oder Regelung des Lichtmoduls 18, bspw. bei der Generierung der Ansteuersignale für die Aktoren 20 und/oder bei der Aufbereitung und Erzeugung der Energie zum Betrieb der Lichtquelle 22, berücksichtigt werden.

Figur 2 zeigt eine erfindungsgemäße Beleuchtungseinrichtung 10. Im Unterschied zu der Beleuchtungseinrichtung aus Figur 1 ist die Steckerverbindung 38 derart ausgebildet, dass zumindest einige der elektrischen und/oder elektronischen Bauteile zur Realisierung von Steuergerätefunktionen und zum Betrieb des mindestens einen Lichtmoduls 18 in einem Gehäuse des Steckerelements 40 angeordnet sind. Vorzugsweise sind alle Bauteile zur Realisierung der vollständigen Steuergerätefunktion in dem Steckerelement 40 integriert. Das bedeutet, dass z.B. der Mikrocontroller 28 mit dem Mikroprozessor in dem Steckerelement 40 integriert ist. Weitere Prozessoren und/oder Speicherelemente können ebenfalls in dem Gehäuse des Steckerelements 40 angeordnet sein. Auch Leistungshalbleiterelemente zum Aufbereiten der Versorgungsspannung für die Lichtquelle 22 können im Gehäuse des Steckerelements 40 angeordnet sein. Auch die bisher erforderlichen Leitungen 32' und 36' sind nun in dem Steckerelement 40 integriert. Alle Bauteile im Innern des Gehäuses des Steckerelements 40 können umspritzt sein, vorzugsweise mit einem gut Wärme leitenden Kunststoffmaterial.

Das "intelligente" Steckerelement 40 mit den darin integrierten Bauteilen zur Realisierung der Steuerungs- und/oder Regelungsfunktion des Lichtmoduls 18 wird von dem Anschlusselement 42 aufgenommen. Allerdings ist das Anschlusselement 42 nun an die Leitungen 24 und 30 zur Ansteuerung und/oder Energieversorgung der Lichtquelle 22 und der Aktoren 20 angeschlossen.

Das Steckerelement 40 kann dabei ohne zusätzliche mechanische Befestigungsmittel in dem Anschlusselement 42 gehalten werden. Es können aber zusätzlich lösbare Sicherungsmittel, wie bspw. Drahtbügel, Schnappelemente oder Magnete, vorgesehen sein, die ein unbeabsichtigtes Lösen des Steckerelements 40 von dem Anschlusselement 42 aufgrund von mechanischen Belastungen (z.B. Vibrationen, Stößen, Schwingungen) verhindern. Die Sicherungsmittel können an dem Steckerelement 40, dem Anschlusselement 42 und/oder dem Gehäuse 12 der Beleuchtungseinrichtung 10 angeordnet sein.

Im Inneren des Gehäuses 12 ist zwischen dem Anschlusselement 42 lediglich die Steuerleitung 24 zum Betreiben der Lichtquelle 22 und die Steuerleitung 30 zum Betreiben der Aktoren 20 nötig. Auf die in Figur 1 gezeigten Leitungen 32' und 36' zwischen dem Anschlusselement 42 und dem Steuergerät 26 kann dabei verzichtet werden. In der Erfindung sind die Leitungen 32' und 36' auf engstem Raum im Gehäuse des Steckerelements 40 integriert. Von außen sind an dem Steckerelement 40 die elektrische Versorgungsleitung 32 und die Signalleitung 36 angeschlossen.

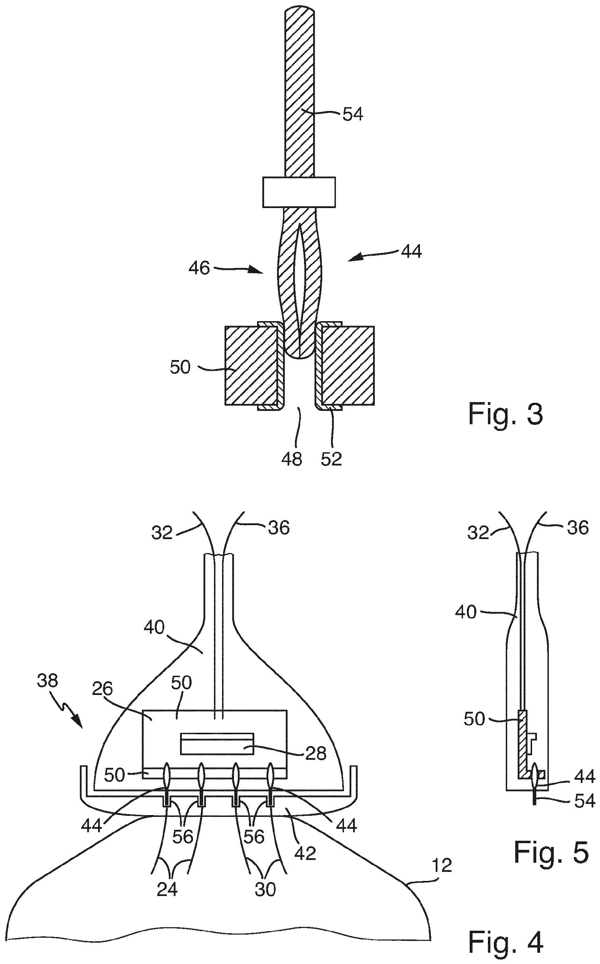

In der erfindungsgemäßen Ausführungsform des Steckerelements 40 ist vorgesehen, das das Steckerelement 40 Kontaktelemente in Form von Kontaktstiften aufweist, die bevorzugt durch Press-Fit-Pins 44 gebildet werden. An Hand von Figur 3 soll das Prinzip Verwendung von Press-Fit-Pins 44 näher erläutert werden. Press-Fit-Pins 44 bestehen in der Regel aus einem vorzugsweise elastisch federnden, metallischen (z.B. verzinnten) Kern 46, der in eine Bohrung 48 einer Platine 50 axial zu einer Längsachse des Kerns 46 eingepresst wird. Die Bohrung 48 weist eine metallische Auskleidung 52 auf, wobei z.B. Kupferblech am Innenumfang der Bohrung 48 angeordnet sein kann. Die metallische Auskleidung 52 ist über Leiterbahnen der Platine 50 kontaktiert (nicht dargestellt). Der in Figur 3 dargestellte Kern 46 ist beispielhaft und kann auf beliebig andere Weise ausgestaltet werden. Der Kern 46 muss derart ausgebildet sein, dass eine schwer lösbare Verbindung mit der Platine 50 hergestellt werden kann. Beim Einpressen werden die Press-Fit-Pins 44 durch mechanischen Druck in der metallisch ausgekleideten Bohrung 48 derart eingepresst, dass sich die Press-Fit-Pins 44 verformen. Es entsteht dabei eine mechanisch hoch belastbare Verbindung zwischen den Pins 44 und der Leiterplatte 50. Außerdem entsteht dabei eine elektrische Kontaktierung zwischen dem Press-Fit-Pin 44 und der Auskleidung 52 der Bohrung 48. Es ist kein Lötvorgang nötig.

Die Bauhöhe der Leiterplatte 50 mit der daran befestigten Kontaktstift, insbesondere im Bereich der Kontaktierung mit der Leiterplatte 50, ist besonders klein ausgebildet. An einem dem federnden Kern 46 gegenüberliegenden freien Ende ist ein Kontaktstift 54 ausgebildet, an dem ein an die metallische Auskleidung 52 angelegtes elektrisches Signal abgegriffen werden kann. Umgekehrt kann natürlich auch ein am Kontaktstift 54 angelegtes elektrisches Signal über die Auskleidung 52 auf Leiterbahnen der Platine 50 übertragen werden, um dieses Signal durch das Steuergerät 26 entsprechend zu verarbeiten.

Figur 4 zeigt ein Ausführungsbeispiel der Steckerverbindung 38 in einer aufgeschnittenen Seitenansicht. Figur 5 zeigt das Steckerelement 40 der Steckerverbindung 38 aus Figur 4 in einem Längsschnitt durch die Steckerverbindung 38 aus Figur 4. Die elektrische Versorgungsleitung 32 und die Signalleitung 36 sind in das Steckerelement 40 geführt und sind so auf der Platine 50 an nicht dargestellten Leiterbahnen angeschlossen. Auf der Platine 50 sind bevorzugt alle erforderlichen Bauteile zur Realisierung der vollständigen Steuergerätefunktion für die Beleuchtungseinrichtung 10 bzw. das Lichtmodul 18 angeordnet. Man kann davon sprechen, dass das Steckerelement 40 alle erforderlichen Bauteile aufweist, wenn auf ein zusätzliches externes Steuergerät zum Betrieb des Lichtmoduls 18 oder der Beleuchtungseinrichtung 10 verzichtet werden kann. Insbesondere umfasst das Steckerelement 40 den Mikrocontroller 28.

Die Platine 50 ist im Querschnitt abgewinkelt, so dass eine L-Form ergibt (siehe Figur 5). Der kurze Schenkel der L-förmig ausgebildeten Platine 50 weist Bohrungen 48 zum Einpressen der Press-Fit-Pins 44 auf. Die Bohrungen 48 haben die metallischen Auskleidungen 52, in denen die Press-Fit-Pins 44 mit dem dazu vorgesehenen Ende 46 verpresst sind. Die Platine 50 kann dabei derart in dem Gehäuse des Steckerelements 40 angeordnet sein, dass die Kontaktstifte 54 der Press-Fit-Pins 44 aus dem Gehäuse des Steckerelements 40 herausragen und eine matrixartige Steckerleiste bilden. Figur 4 zeigt eine beispielhafte Anordnung von vier Kontaktstiften 54 in einer Reihe nebeneinander. Selbstverständlich können die Stifte 54 auch in mehreren Reihen angeordnet sein. Die Anzahl und Anordnung der Kontaktstifte 54 ist frei wählbar.

Eine mögliche Variante der Ausführung aus Figur 5 besteht darin, dass das Gehäuse des Steckerelements 40 nach vorne hin durch die Platine 50 abgeschlossen wird. Insbesondere könnte das Gehäuse zweiteilig ausgebildet sein, wobei ein vorderer Teil des Gehäuses durch einen vorderen Teil der Platine 50 gebildet wird, der die Kontaktstifte 54 trägt. Der hintere Teil der Platine 50, der bspw. den Mikrocontroller 28 und andere elektrische Bauteile des Steuergeräts 26 trägt, kann wie bisher von dem Gehäuse des Steckerelements 40 eingeschlossen sein. Im vorderen Bereich weist das Gehäuse eine Öffnung auf, die zur Aufnahme und Halterung des vorderen Teils der Platine 50 ausgebildet ist. Dies hat den Vorteil, dass das Steckerelement 40 besonders einfach montiert werden kann, insbesondere wenn die Kontaktstifte 54 nicht nur in einer Reihe nebeneinander, sondern in mehreren Reihen angeordnet sind.

In dem in Figur 4 gezeigten Beispiel erzeugt das Steuergerät 26 aus den Signalen der Leitungen 32 und 36 einerseits Energiesignale zum Steuern der Lichtstärke der Lichtquelle 22, die an die erste Steuerleitung 24 angelegt werden. Andererseits erzeugt das Steuergerät 26 Ansteuersignale für die Aktoren 20, die an die zweite Steuerleitung 30 angelegt werden.

Um die Signale, die an den Kontaktstiften 54 anliegen, mit der vorgesehenen Leitung 24 zur Steuerung der Lichtstärke des Lichtquellen 22 und der vorgesehenen Leitung 30 zur Steuerung der Aktoren 20 zu übertragen, ist das Steckerelement 40 von dem Anschlusselement 42 aufgenommen. Das Anschlusselement 42 ist an dem Gehäuse 12 der Beleuchtungseinrichtung 10 angeordnet und weist Buchsen 56 auf, die in Form und Anordnung im Wesentlichen komplementär zu den Kontaktstiften 54 ausgebildet sind. Die Kontaktstifte 54 werden in den Buchsen 56 aufgenommen und elektrisch kontaktiert. Die Anordnung der Buchsen bildet eine Buchsenleiste, die mit der Stiftleiste der Kontaktstifte 54 elektrisch und mechanisch zusammenwirkt. Das Steckerelement 40 wird also durch die Reibkräfte, die zwischen den Kontaktstiften 54 und den Buchsen 56 wirken, nicht nur kontaktiert, sondern auch mechanisch gehalten.

## Patentansprüche

1. Beleuchtungseinrichtung (10) eines Kraftfahrzeugs, umfassend
- ein Gehäuse (12), in dem mindestens ein Lichtmodul (18) zum Erzeugen mindestens einer Lichtverteilung angeordnet ist,
- ein Steuergerät (26) mit elektrischen und/oder elektronischen Bauteilen zur Realisierung einer Steuergerätefunktion zum Betreiben des mindestens einen Lichtmoduls (18),
- ein Steckerelement (40), über das Leitungen (32; 36) von dem Steuergerät (26) zur Energieversorgung und/oder zum Ansteuern des mindestens einen Lichtmoduls (18) angeschlossen sind, und
- ein an dem Gehäuse (12) angeordnetes, von außen zugängliches Anschlusselement (42) zur Aufnahme des Steckerelements (40),
wobei elektronische und/oder elektrische Bauteile zur Realisierung zumindest eines Teils der Steuergerätefunktion in dem Steckerelement (40) integriert sind **dadurch gekennzeichnet, dass** das Anschlusselement (42) metallische Buchsen (56) und das Steckerelement (40) metallische Kontaktstifte (54) aufweist, die zur Bildung eines elektrischen Kontakts mit den metallischen Buchsen (56) des Anschlusselements (42) zusammenwirken.

2. Beleuchtungseinrichtung (10) nach Anspruch 1,
**dadurch gekennzeichnet, dass** elektronische und/oder elektrische Bauteile zur Realisierung der vollständigen Steuergerätefunktion in dem Steckerelement (40) integriert sind.

3. Beleuchtungseinrichtung (10) nach Anspruch 1 oder 2,
**dadurch gekennzeichnet, dass** das Steckerelement (40) von dem Anschlusselement (42) lösbar aufgenommen ist.

4. Beleuchtungseinrichtung (10) nach einem der vorhergehenden Ansprüche, **dadurch gekennzeichnet, dass** das Steckerelement (40) ohne zusätzliche Befestigungsmittel von dem Anschlusselement (42) gehalten ist.

5. Beleuchtungseinrichtung (10) nach Anspruch 3,
**dadurch gekennzeichnet, dass** das Steckerelement (40) durch Sicherungsmittel gegen ungewolltes Lösen von dem Anschlusselement (42) aufgrund von mechanischen Belastungen gesichert ist.

6. Beleuchtungseinrichtung (10) nach einem der vorhergehenden Ansprüche, **dadurch gekennzeichnet, dass** die Kontaktstifte (54) des Steckerelements (40) Bestandteile von Press-Fit-Pins (44) sind, deren Kontaktstifte (54) mit Buchsen (56) des Anschlusselements (42) elektrisch und mechanisch zusammenwirken.

7. Beleuchtungseinrichtung (10) nach Anspruch 6, **dadurch gekennzeichnet, dass** die Press-Fit-Pins (44) mit Bohrungen (48) einer Platine (50), auf der die elektronischen und/oder elektrischen Bauteile zur Realisierung der Steuergerätefunktion angeordnet und kontaktiert sind, eine nur unter Aufbringung eines vorgegebenen Kraftaufwands lösbare Einheit bilden.

8. Beleuchtungseinrichtung (10) nach Anspruch 6 oder 7, **dadurch gekennzeichnet, dass** die Kontaktstifte (54) der Press-Fit-Pins (44) derart angeordnet sind, dass sie eine Stiftleiste des Steckerelements (40) bilden, und die Kontaktstifte (54) der Stiftleiste mit entsprechend angeordneten Buchsen (56) einer Buchsenleiste des Anschlusselements (42) elektrisch und mechanisch zusammenwirken.

9. Beleuchtungseinrichtung (10) nach einem der vorhergehenden Ansprüche, **dadurch gekennzeichnet, dass** die elektronischen und/oder elektrischen Bauteile zur Realisierung der Steuergerätefunktion in dem Steckerelement (40) umspritzt sind.

10. Beleuchtungseinrichtung (10) nach einem der vorhergehenden Ansprüche, **dadurch gekennzeichnet, dass** das Steckerelement (40) eine Kontrollleuchte aufweist.

11. Beleuchtungseinrichtung (10) nach einem der vorhergehenden Ansprüche, **dadurch gekennzeichnet, dass** das mindestens eine Lichtmodul (18) der Beleuchtungseinrichtung (10) zur Realisierung mindestens einer Scheinwerferfunktion und/oder mindestens einer Leuchtenfunktion ausgebildet ist.

12. Beleuchtungseinrichtung (10) nach einem der vorhergehenden Ansprüche, **dadurch gekennzeichnet, dass** das mindestens eine Lichtmodul (18) der Beleuchtungseinrichtung (10) zur Realisierung einer variablen Lichtverteilung ausgebildet ist.

13. Beleuchtungseinrichtung (10) nach einem der vorhergehenden Ansprüche, **dadurch gekennzeichnet, dass** das mindestens eine Lichtmodul (18) der Beleuchtungseinrichtung (10) eine Halbleiterlichtquelle, insbesondere eine Leuchtdiode (22), umfasst.

14. Beleuchtungseinrichtung (10) nach einem der vorhergehenden Ansprüche, **dadurch gekennzeichnet, dass** ein Gehäuse des Steckerelements (40) mehrteilig ausgebildet ist, wobei ein vorderer Teil des Gehäuses zumindest durch einen vorderen Teil einer Platine (50), auf der die elektronischen und/oder elektrischen Bauteile zur Realisierung der Steuergerätefunktion angeordnet und kontaktiert sind, gebildet ist.

15. Beleuchtungseinrichtung (10) nach Anspruch 14, **dadurch gekennzeichnet, dass** die Kontaktstifte (54) des Steckerelements (40) an dem vorderen Teil der Platine (50), die den vorderen Teil des Steckergehäuses bildet, angeordnet sind.

## Claims

1. Lighting device (10) of a motor vehicle, comprising
- a housing (12) in which at least one light module (18) for generating at least one light distribution is arranged,
- a control unit (26) with electrical and/or electronic components for implementing a control unit function for operating the at least one light module (18),
- a plug element (40) via which lines (32; 36) from the control unit (26) for supplying power and/or for driving the at least one light module (18) are connected, and
- a connecting element (42) arranged on the housing (12) and accessible from the outside for receiving the plug element (40),
wherein electronic and/or electrical components are integrated in the plug element (40) to implement at least part of the control unit function, **characterised in that** the connecting element (42) has metallic sockets (56) and the plug element (40) has metallic contact pins (54) which cooperate with the metallic sockets (56) of the connecting element (42) to form an electrical contact.

2. Lighting device (10) according to claim 1, **characterised in that** electronic and/or electrical components for realising the complete control unit function are integrated in the plug element (40).

3. Lighting device (10) according to claim 1 or 2, **characterized in that** the plug element (40) is detachably received by the connecting element (42).

4. Lighting device (10) according to one of the preceding claims, **characterized in that** the plug element (40) is held by the connecting element (42) without additional fastening means.

5. Lighting device (10) according to claim 3, **characterized in that** the plug element (40) is secured by securing means against unintentional detachment from the connecting element (42) due to mechanical loads.

6. Lighting device (10) according to one of the preceding claims, **characterized in that** the contact pins (54) of the plug element (40) are components of press-fit pins (44), the contact pins (54) of which interact electrically and mechanically with sockets (56) of the connecting element (42).

7. Lighting device (10) according to claim 6, **characterized in that** the press-fit pins (44) are connected to bores (48) of a circuit board (50) on which the electronic and/or electrical components for realizing the control unit function are arranged and contacted, forming a unit which can only be detached by applying a predetermined amount of force.

8. Lighting device (10) according to claim 6 or 7, **characterized in that** the contact pins (54) of the press-fit pins (44) are arranged in such a way that they form a pin strip of the plug element (40), and the contact pins (54) of the pin strip interact electrically and mechanically with correspondingly arranged sockets (56) of a socket strip of the connecting element (42).

9. Lighting device (10) according to one of the preceding claims, **characterised in that** the electronic and/or electrical components for realising the control unit function are overmoulded in the plug element (40).

10. Lighting device (10) according to one of the preceding claims, **characterised in that** the plug element (40) has a pilot lamp.

11. Lighting device (10) according to one of the preceding claims, **characterized in that** the at least one light module (18) of the lighting device (10) is designed to realize at least one headlight function and/or at least one signal light function.

12. Lighting device (10) according to one of the preceding claims, **characterized in that** the at least one light module (18) of the lighting device (10) is designed to realize a variable light distribution.

13. Lighting device (10) according to one of the preceding claims, **characterized in that** the at least one light module (18) of the lighting device (10) comprises a semiconductor light source, in particular a light-emitting diode (22).

14. Lighting device (10) according to one of the preceding claims, **characterized in that** a housing of the plug element (40) is formed in several parts, a front part of the housing being formed at least by a front part of a printed circuit board (50) on which the electronic and/or electrical components for implementing the control unit function are arranged and contacted.

15. Lighting device (10) according to claim 14, **characterized in that** the contact pins (54) of the connector element (40) are arranged on the front part of the board (50) forming the front part of the connector housing.

## Revendications

1. Dispositif d'éclairage (10) d'un véhicule à moteur, comprenant
- un boîtier (12), dans lequel est disposé au moins un module lumineux (18) destiné à produire au moins une distribution de lumière,
- un appareil de commande (26) avec des composants électriques et/ou électroniques destinés à réaliser une fonction d'appareil de commande pour faire fonctionner l'au moins un module lumineux (18),
- un élément enfichable (40), par l'intermédiaire duquel des conduites (32; 36) sont raccordées à partir de l'appareil de commande (26) pour l'alimentation en énergie et/ou pour la commande de l'au moins un module lumineux (18), et
- un élément de raccordement (42) disposé sur le boîtier (12), accessible de l'extérieur, pour le logement de l'élément enfichable (40),
dans lequel des composants électroniques et/ou électriques destinés à réaliser au moins une partie de la fonction d'appareil de commande sont intégrés dans l'élément enfichable (40), **caractérisé en ce que** l'élément de raccordement (42) présente des douilles métalliques (56) et l'élément enfichable (40) des broches de contact métalliques (54), qui, pour la formation d'un contact électrique, coopèrent avec les douilles métalliques (56) de l'élément de raccordement (42).

2. Dispositif d'éclairage (10) selon la revendication 1, **caractérisé en ce que** des composants électroniques et/ou électriques destinés à réaliser la fonction d'appareil de commande intégrale sont intégrés dans l'élément enfichable (40).

3. Dispositif d'éclairage (10) selon la revendication 1 ou 2, **caractérisé en ce que** l'élément enfichable (40) est logé de manière détachable par l'élément de raccordement (42) .

4. Dispositif d'éclairage (10) selon l'une quelconque des revendications précédentes, **caractérisé en ce que** l'élément enfichable (40) est retenu par l'élément de raccordement (42) sans moyens de fixation supplémentaires.

5. Dispositif d'éclairage (10) selon la revendication 3, **caractérisé en ce que** l'élément enfichable (40) est empêché, par des moyens de blocage, de se détacher accidentellement de l'élément de raccordement (42) en raison de sollicitations mécaniques.

6. Dispositif d'éclairage (10) selon l'une quelconque des revendications précédentes, **caractérisé en ce que** les broches de contact (54) de l'élément enfichable (40) font partie de broches à ajustement forcé (44), dont les broches de contact (54) coopèrent de manière électrique et mécanique avec des douilles (56) de l'élément de raccordement (42).

7. Dispositif d'éclairage (10) selon la revendication 6, **caractérisé en ce que** les broches à ajustement forcé (44) forment avec des trous (48) d'une carte de circuits imprimés (50), sur laquelle les composants électroniques et/ou électriques destinés à réaliser la fonction d'appareil de commande sont disposés et mis en contact, une unité détachable uniquement par application d'un effort prédéfini.

8. Dispositif d'éclairage (10) selon la revendication 6 ou 7, **caractérisé en ce que** les broches de contact (54) de la broche à ajustement forcé (44) sont disposées de telle sorte qu'elles forment une barrette à broches de l'élément enfichable (40), et les broches de contact (54) de la barrette à broches coopèrent de manière électrique et mécanique avec des douilles (56) disposées de manière correspondante d'une barrette à douilles de l'élément de raccordement (42).

9. Dispositif d'éclairage (10) selon l'une quelconque des revendications précédentes, **caractérisé en ce que** les composants électroniques et/ou électriques destinés à réaliser la fonction d'appareil de commande sont surmoulés dans l'élément enfichable (40).

10. Dispositif d'éclairage (10) selon l'une quelconque des revendications précédentes, **caractérisé en ce que** l'élément enfichable (40) présente un témoin lumineux.

11. Dispositif d'éclairage (10) selon l'une quelconque des revendications précédentes, **caractérisé en ce que** l'au moins un module lumineux (18) du dispositif d'éclairage (10) est conçu pour réaliser au moins une fonction de projecteur et/ou au moins une fonction de lampe.

12. Dispositif d'éclairage (10) selon l'une quelconque des revendications précédentes, **caractérisé en ce que** l'au moins un module lumineux (18) du dispositif d'éclairage (10) est conçu pour réaliser une distribution de lumière variable.

13. Dispositif d'éclairage (10) selon l'une quelconque des revendications précédentes, **caractérisé en ce que** l'au moins un module lumineux (18) du dispositif d'éclairage (10) comprend une source de lumière à semi-conducteur, en particulier une diode électroluminescente (22).

14. Dispositif d'éclairage (10) selon l'une quelconque des revendications précédentes, **caractérisé en ce qu'**un boîtier de l'élément enfichable (40) est réalisé en plusieurs parties, dans lequel une partie avant du boîtier est formée au moins par une partie avant d'une carte de circuits imprimés (50), sur laquelle les composants électroniques et/ou électriques destinés à réaliser la fonction d'appareil de commande sont disposés et mis en contact.

15. Dispositif d'éclairage (10) selon la revendication 14, **caractérisé en ce que** les broches de contact (54) de l'élément enfichable (40) sont disposées sur la partie avant de la carte de circuits imprimés (50), qui forme la partie avant du boîtier de connecteur.
